# EUROPEAN PATENT APPLICATION

(11) **EP 4 722 298 A1**
(43) Date of publication of application: **08.04.2026**
(21) Application number: 24810158.6
(22) Date of filing: 26.04.2024
(51) Int. Cl.: C08L 75/04, C08J 9/14, C08J 9/12

(54) **FOAMING COMPOSITION, AND POLYURETHANE FOAM AND PREPARATION METHOD THEREFOR**

(30) Priority: 24.05.2023 CN 202310591990
(71) Applicant: Quanzhou Yuji Advanced Materials Co., Ltd., Quanzhou, Fujian 362800 (CN)
(72) Inventor: JIA, Xiaoqing, Quanzhou, Fujian 362800 (CN); LI, Chengzhou, Quanzhou, Fujian 362800 (CN); CHEN, Zhaohui, Quanzhou, Fujian 362800 (CN); QUAN, Hengdao, Quanzhou, Fujian 362800 (CN)
(74) Representative: Lavoix
(86) International application number: PCT/CN2024/090055
(87) International publication number: WO 2024/239911

(57) **Abstract**

The present application discloses a foaming composition, comprising a hydrocarbon, a fluorinated compound (CₙH₂ₙ₋ₘO_{z}Xₘ), and water, wherein: the mass fraction of the hydrocarbon is 20-90%, preferably 30-70%; the mass fraction of the CₙH₂ₙ₋ₘO_{z}Xₘ is 10-80%, preferably 30-60%; the mass fraction of the water is 0.1-15%, preferably 0.5-5%; in the CₙH₂ₙ₋ₘO_{z}Xₘ, n is an integer of 3-10; z is 0 or 1; and n ≤ m ≤ 2n. The present application further provides a polyurethane foam and a preparation method therefor. In the foaming composition provided by the present application, the GWP value of the hydrocarbon is smaller than 25, the GWP value of the fluorinated compound is smaller than 10, and the water is converted into CO₂ during the preparation of the polyurethane foam, and the GWP value of CO₂ is 1. Therefore, the GWP value of the foaming agent composition provided by the present application is less than 25, which is far less than an environmental protection value of 150 required by policies, and the foaming agent composition is an ideal environmentally friendly foaming agent composition.

## Description

### TECHNICAL FIELD

The present application relates to the field of foaming thermal insulation materials, in particular to a foaming agent composition, a polyurethane foam and a preparation method therefor.

### BACKGROUND ART

Rigid polyurethane foam is widely used in cold storage, water heater, pipeline thermal insulation and many other fields because of its good thermal insulation performance. With the international community's demand for the zero Ozone Depletion Potential (ODP) and low Global Warming Potential (GWP) of the foaming agent used for preparing rigid polyurethane foam, the traditional chlorofluorocarbon foaming agent has been eliminated, and the hydrocarbon foaming agent technology represented by cyclopentane is gradually being vigorously promoted. Currently, the foaming agent used to prepare polyurethane foam is mainly a multi-component foaming agent composed of cyclopentane, isopentane, pentafluoropropane (HFC-245fa), pentafluorobutane (HFC-365mfc), and tetrafluoroethane (HFC-134a).

Currently, the zero Ozone Depletion Potential (ODP) of the multi-component foaming agent composed of cyclopentane, isopentane, pentafluoropropane (HFC-245fa), pentafluorobutane (HFC-365mfc), and tetrafluoroethane (HFC-134a) can meet the environmental requirements, but its global warming potential (GWP) is generally around 500 (when the ratio of pentane to fluorocarbon is about 1:1), which is much higher than the limit of GWP 150, and therefore cannot meet the requirements of GWP. In addition, when using this kind of multi-component foaming agent, in order to meet the performances such as compression strength, dimensional stability and other properties of polyurethane foam, the density of polyurethane foam must be higher than 30kg/m³, i.e., a higher density,. Therefore, when manufacturing polyurethane foam per unit volume, more materials (such as foaming agent, dry white material, etc.) are needed, which increase the cost of raw materials.

### SUMMARY OF THE INVENTION

The present application aims to solve the technical problems existing in the prior art. The purpose of the present invention lies in: 1) to provide an environmentally friendly foaming agent composition, i.e., the GWP of the resulting foaming agent composition is 25 or less, which is far below the requirement of 150 stipulated by national regulations; 2) to provide a method of preparing polyurethane foam by using the resulting foaming agent composition, and the prepared polyurethane foam has the characteristics of small molding density and small thermal conductivity.

The present application provides a foaming agent composition comprising a hydrocarbon, a fluorinated compound (CₙH₂ₙ₋ₘO_{z}Xₘ), and water. In said foaming agent composition, the mass fraction of the hydrocarbons is 20-90%, the mass fraction of CₙH₂ₙ₋ₘO_{z}Xₘ is 10-80%, and the mass fraction of the water is 0.1-15%. In CₙH₂ₙ₋ₘO_{z}Xₘ, n is an integer of 3-10; z is 0 or 1; n ≤ m ≤ 2n, X is halogen.

Furthermore, X is selected from at least one of F, Cl, Br, and I, and when X comprises two or more elements, F element accounts for 50 mol% or above in X.

Furthermore, the fluorinated compound is selected from one or more of 3,3,3-trifluoropropene, cis-1,3,3,3-tetrafluoropropene, trans-1,3,3,3-tetrafluoropropene, trans-1,1,1,3,3,3-hexafluoro-2-butene, cis-1,1,1,3,3,3-hexafluoro-2-butene, 1-chloro-2,3,3-trifluoropropene, 2-chloro-3,3,3-trifluoropropene, 1-chloro-2,3,3,3-tetrafluoropropene, perfluorobutanone, perfluoropentanone, perfluorohexanone, methylperfluoroheptanone, cis-1-chloro-3,3,3-trifluoropropene, and trans-1-chloro-3,3,3-trifluoropropene.

Furthermore, the foaming agent composition consists of the hydrocarbon, the CₙH₂ₙ₋ₘO_{z}Xₘ, and the water. In the foaming agent composition, the mass fraction of the hydrocarbon is 20-90%, the mass fraction of the CₙH₂ₙ₋ₘO_{z}Xₘ is 10-80%, and the mass fraction of the water is 0.1-15%.

Furthermore, the GWP value of the foaming agent composition is less than 25.

Furthermore, the hydrocarbon comprises a first hydrocarbon and a second hydrocarbon, and the boiling point of the first hydrocarbon is lower than that of the second hydrocarbon.

Furthermore, the mass ratio of the first hydrocarbon to the second hydrocarbon is (1-50):10. Furthermore, the first hydrocarbon is n-butane, isobutane, or neopentane.

The second hydrocarbon is selected from any one of cyclopentane, n-pentane, and isopentane. Furthermore, the fluorinated compound comprises a first fluorinated compound and a second fluorinated compound, and the boiling point of the first fluorinated compound is lower than that of the second fluorinated compound.

Furthermore, the mass ratio of the first fluorinated compound to the second fluorinated compound is (1-50):10.

Furthermore, the first fluorinated compound is selected from any one of 3,3,3-trifluoropropene, cis-1,3,3,3-tetrafluoropropene, perfluorobutanone, 2-chloro-3,3,3-trifluoropropene, trans-1,3,3,3-tetrafluoropropene, or trans-1,1,1,3,3,3-hexafluoro-2-butene.

The second fluorinated compound is selected from any one of perfluoropentanone, perfluorohexanone, methyl perfluoroheptanone, 1-chloro-2,3,3-trifluoropropene, 1-chloro-2,3,3,3-tetrafluoropropene, cis-1,1,1,3,3,3-hexafluoro-2-butene,cis 1-chloro-3,3,3-trifluoropropene, or trans 1-chloro-3,3,3-trifluoropropene.

The present application provides a polyurethane foam, wherein the raw material of the polyurethane foam comprises the aforementioned foaming agent composition.

Further, the raw materials of the polyurethane foam also include polyols, organic polyisocyanates and auxiliary agents.

Furthermore, the mass ratio of the auxiliary agent, foaming agent composition, and polyol is (0.01-0.2):(0.3-3):1, preferably (0.03-0.1):(0.5-2):1; or
the mass ratio of the auxiliary agent, foaming agent composition, and organic polyisocyanate is (0.01-0.3):(0.25-4):1, preferably (0.03-0.2):(0.5-2):1.

Further, the density of the polyurethane foam is less than 30.0kg/m³; or
the thermal conductivity of the polyurethane foam is less than 20.0mW/m·k.

The present application provides a method for preparing polyurethane foam, comprising the following steps:
providing the aforementioned foaming agent composition;
mixing a polyol and an auxiliary agent to prepare a dry white material;
mixing the foaming agent composition, water, and the dry white material under sealed conditions at normal temperature to obtain white material liquid;
mixing an organic polyisocyanate with the white material liquid and allowing them to react, to prepare polyurethane foam material liquid; and
forming the polyurethane foam material liquid into a polyurethane foam having desired shape through a molding reaction by means of extrusion or spray coating.

Furthermore, the time for mixing the foaming agent composition, the water, and the dry white material under sealed conditions at normal temperature is 0.5-24 hours; or
the time for mixing and reacting the organic polyisocyanate and the white material liquid is 0.1-4 hours.

For the foaming agent composition provided herein, the GWP value of the hydrocarbons in the foaming agent composition is less than 25, and the GWP value of the fluorinated compounds is less than 10. And the water produces CO₂ in the process of preparing polyurethane foam, and the GWP value of CO₂ is 1. Therefore, the GWP value of the foaming agent composition provided herein is less than 10, which is far below the environmental protection value of 150 required by the policy, making it an ideal environmentally friendly foaming agent composition.

Compared to the existing polyurethane foam, the polyurethane foam prepared by the foaming agent composition provided herein has a significantly reduced molding density (which is 15% or above lower than the density of the polyurethane foam prepared by the existing cyclopentane foaming agent composition, and is 5% or above lower than the density of the polyurethane foam currently prepared by using the ternary foaming agent composition). When manufacturing equal volume of polyurethane foam, less raw materials (foaming agent composition + dry white material) are needed, thus reducing the manufacturing cost of the polyurethane foam. The polyurethane foam prepared by the foaming agent composition provided herein has lower thermal conductivity and better thermal insulation performance, which is beneficial to reducing the energy consumption of refrigeration equipment. In addition, the polyurethane foam liquid prepared by using the foaming agent composition provided herein has better fluidity, more uniform density distribution, smoother surface, better foam compression strength and foam dimensional stability, which makes the overall performance of the resulting polyurethane foam more excellent. Therefore, the polyurethane foam made using the foaming agent composition herein has low molding density, low thermal conductivity, higher compression strength and release performance, that is, the polyurethane foam made using the foaming agent composition provided herein has better overall performance.

### DETAIL DESCRIPTION OF THE INVENTION

The following describes and illustrates the exemplary embodiments of the present application, including various details of the embodiments to facilitate understanding, and should be considered merely exemplary. Therefore, those skilled in the art should recognize that various changes and modifications can be made to the embodiments described herein without departing from the scope and spirit of the present application. Similarly, for clarity and conciseness, descriptions of well-known functions and structures have been omitted in the following description.

The present application provides a foaming agent composition comprising a hydrocarbon, a fluorinated compound (CₙH₂ₙ₋ₘO_{z}Xₘ), and water. In the foaming agent composition, the mass fraction of the hydrocarbon is 20-90%, preferably 30-70%, the mass fraction of the CₙH₂ₙ₋ₘO_{z}Xₘ is 10-80%, preferably 30-60%, and the mass fraction of the water is 0.1-15%, preferably 0.5-5%. In the CₙH₂ₙ₋ₘO_{z}Xₘ, n is an integer of 3 to 10; z is 0 or 1; n ≤ m ≤ 2n, X is halogen.

Furthermore, X is selected from at least one of F, Cl, Br, and I, and when X comprises two or more elements, F element accounts for 50 mol% or above in X.

In some embodiments, X is F.

In some embodiments, X is Cl.

In some embodiments, X is Br.

In some embodiments, X is I.

In some embodiments, X is F and Cl.

In some embodiments, X is F and Br.

In some embodiments, X is F and I.

In some embodiments, X is F, Cl, and I.

In some embodiments, X is F, Br, and I.

In some embodiments, X is F, Cl, Br, and I.

In some embodiments, the CₙH₂ₙ₋ₘO_{z}Xₘ is a fluoroalkene.

In some embodiments, the CₙH₂ₙ₋ₘO_{z}Xₘ is a fluorinated ketone.

In some embodiments, the value of n can be 3, 4, 5, 6, 7, 8, 9, or 10, etc.

The present application provides a foaming agent composition consisting of a hydrocarbon, a fluorinated compound (CₙH₂ₙ₋ₘO_{z}Xₘ), and water. In the foaming agent composition, the mass fraction of the hydrocarbon is 20-90%, preferably 30-70%, the mass fraction of the fluorinated compound is 10-80%, preferably 30-60%, and the mass fraction of the water is 0.1-15%, preferably 0.5-5%.

In some embodiments, the mass fraction of the hydrocarbon is 20-90%.

In some embodiments, the mass fraction of the hydrocarbon is 30-70%.

In some embodiments, the mass fraction of the hydrocarbon is 30-80%.

In some embodiments, the mass fraction of the hydrocarbon is 30-90%.

Specifically, the mass fraction of the hydrocarbon can be 20%, 25%, 30%, 35%, 40%, 45%, 50%, 55%, 60%, 65%, 70%, 75%, 80%, 85%, or 90%.

In some embodiments, the mass fraction of the fluorinated compound is 10-80%.

In some embodiments, the mass fraction of the fluorinated compound is 30-60%.

In some embodiments, the mass fraction of the fluorinated compound is 30-70%.

In some embodiments, the mass fraction of the fluorinated compound is 30-80%.

Specifically, the mass fraction of the fluorinated compound can be 10%, 15%, 20%, 25%, 30%, 35%, 40%, 45%, 50%, 55%, 60%, 65%, 70%, 75%, or 80%.

In some embodiments, the mass fraction of the water is 0.1-15%.

In some embodiments, the mass fraction of the water is 0.5-5%.

In some embodiments, the mass fraction of the water is 0.5-10%.

In some embodiments, the mass fraction of the water is 0.5-15%.

Specifically, the mass fraction of the water can be 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5% or 15%.

In the present application, the GWP value of the foaming agent composition is less than 10, for example, it can be 9.

In the present application, the hydrocarbon comprises a first hydrocarbon and a second hydrocarbon, and the boiling point of the first hydrocarbon is lower than that of the second hydrocarbon.

The first hydrocarbon is a low boiling point hydrocarbon with a boiling point of less than or equal to 20 °C. For example, the boiling point can be 20 °C, 19 °C, 18 °C, 17 °C, 16 °C, 15 °C, 14 °C, 13 °C, 12 °C, 11 °C, or 10 °C, etc.

The second hydrocarbon is a high boiling point hydrocarbon with a boiling point of greater than 20 °C. For example, it can be 21 °C, 22 °C, 23 °C, 24 °C, 25 °C, 26 °C, 27 °C, or 28 °C, etc.

In the present application, the mass ratio of the first hydrocarbon to the second hydrocarbon is (1-50): 10, preferably (3-30): 10.

Specifically, the mass ratio of the first hydrocarbon to the second hydrocarbon can be 3:10, 4:10, 5:10, 6:10, 7:10, 8:10, 9:10, 10:10, 11:10, 12:10, 13:10, 14:10, 15:10, 16:10, 17:10, 18:10, 19:10, 20:10, 21:10, 22:10, 23:10, 24:10, 25:10, 26:10, 27:10, 28:10, 29:10, or 30:10.

In the present application, the first hydrocarbon is n-butane, isobutane, or neopentane, preferably n-butane;
the second hydrocarbon is selected from any one of cyclopentane, n-pentane, or isopentane, preferably cyclopentane.

Specifically, the boiling point of n-butane is -0.5 °C.

Specifically, the boiling point of isobutane is -10.5 °C.

Specifically, the boiling point of cyclopentane is 49.2 °C.

Specifically, the boiling point of n-pentane is 36 °C.

Specifically, the boiling point of neopentane is 9.5 °C.

Specifically, the boiling point of isopentane is 27.8 °C.

In the present application, the fluorinated compound is selected from one or more of 3,3,3-trifluoropropene, cis-1,3,3,3-tetrafluoropropene, trans-1,3,3,3-tetrafluoropropene, trans-1,1,1,3,3,3-hexafluoro-2-butene, 1-chloro-2,3,3-trifluoropropene, 2-chloro-3,3,3-trifluoropropene, 1-chloro-2,3,3,3-tetrafluoropropene, perfluorobutanone, perfluoropentanone, perfluorohexanone, methyl perfluoroheptanone, cis-1,1,1,3,3,3-hexafluoro-2-butene, cis-1-chloro-3,3,3-trifluoropropene, and trans-1-chloro-3,3,3-trifluoropropene.

In the present application, the fluorinated compound comprises a first fluorinated compound and a second fluorinated compound, and the boiling point of the first fluorinated compound is lower than that of the second fluorinated compound.

The first fluorinated compound is a low boiling fluorinated compound with a boiling point of less than or equal to 15 °C. For example, its boiling point can be 15 °C, 14 °C, 13 °C, or 12 °C, etc.

The second fluorinated compound is a high boiling fluorinated compound with a boiling point of greater than 15 °C. For example, its boiling point can be 20 °C, 25 °C, 30 °C, or 40 °C, etc.

In the present application, the mass ratio of the first fluorinated compound to the second fluorinated compound is (1-50): 10, preferably (3-30):10.

Specifically, the mass ratio of the first fluorinated compound to the second fluorinated compound can be 3:10, 4:10, 5:10, 6:10, 7:10, 8:10, 9:10, 10:10, 11:10, 12:10, 13:10, 14:10, 15:10, 16:10, 17:10, 18:10, 19:10, 20:10, 21:10, 22:10, 23:10, 24:10, 25:10, 26:10, 27:10, 28:10, 29:10, or 30:10.

In the present application, the first fluorinated compound is selected from any one of 3,3,3-trifluoropropene, cis-1,3,3,3-tetrafluoropropene, perfluorobutanone, 2-chloro-3,3,3-trifluoropropene, trans-1,3,3,3-tetrafluoropropene or trans-1,1,1,3,3,3-hexafluoro-2-butene, preferably trans-1,3,3,3-tetrafluoropropene;
the second fluorinated compound is selected from any one of perfluoropentanone, perfluorohexanone, 1-chloro-2,3,3-trifluoropropene, 1-chloro-2,3,3,3-tetrafluoropropene, methyl perfluoroheptanone, cis-1,1,1,3,3,3-hexafluoro-2-butene,cis-1-chloro-3,3,3-trifluoropropene or trans-1-chloro-3,3,3-trifluoropropene, preferably perfluorohexanone or trans-1-chloro-3,3,3-trifluoropropene.

Specifically, the boiling point of 3,3,3-trifluoropropene is -17 °C.

Specifically, the boiling point of cis-1,3,3,3-tetrafluoropropene is 9.6 °C.

Specifically, the boiling point of trans-1,3,3,3-tetrafluoropropene is -19 °C.

Specifically, the boiling point of trans-1-chloro-3,3,3-trifluoropropene is 19 °C.

Specifically, the boiling point of cis-1-chloro-3,3,3-trifluoropropene is 39 °C.

Specifically, the boiling point of 1-chloro-2,3,3-trifluoropropene is 54 °C.

Specifically, the boiling point of 2-chloro-3,3,3-trifluoropropene is 15 °C.

Specifically, the boiling point of cis-1-chloro-2,3,3,3-tetrafluoropropene is 15 °C.

Specifically, the boiling point of trans-1-chloro-2,3,3,3-tetrafluoropropene is 19 °C.

Specifically, the boiling point of perfluorobutanone is 0 °C.

Specifically, the boiling point of perfluoropentanone is 26.9 °C.

Specifically, the boiling point of perfluorohexane is 49 °C.

Specifically, the boiling point of methyl perfluoroheptanone is 57 °C.

Specifically, the boiling point of cis-1,1,1 ,3,3,3-hexafluoro-2-butene is 33.4 °C.

Specifically, the boiling point of trans-1,1,1,3,3,3-hexafluoro-2-butene is 7.5 °C.

In the present application, the boiling point of the foaming agent composition is -19 °C to 55 °C, preferably -10 °C to 40 °C.

Specifically, the boiling point of the foaming agent composition can be -19 °C, -18 °C, -17 °C, -16 °C, -15 °C, -14 °C, -13 °C, -12 °C, -11 °C, -10 °C, -9 °C, -8 °C, -7 °C, -6 °C, -5 °C, -4 °C, -3 °C, -2 °C, -1 °C, 0 °C, 5 °C, 10 °C, 15 °C, 20 °C, 25 °C, 30 °C, 40 °C, 45 °C, 50 °C or 55 °C.

In some embodiments, in the foaming agent composition, the first hydrocarbon is n-butane, the second hydrocarbon is cyclopentane, the first fluorinated compound is trans 1-chloro-3,3,3-trifluoropropene, and the second fluorinated compound is perfluorohexane.

The present application provides a polyurethane foam, the raw material of the polyurethane foam comprises the aforementioned foaming agent composition.

The raw materials of the polyurethane foam also comprise polyols, organic polyisocyanates and auxiliary agents.

The present application provides a polyurethane foam consisting of the aforementioned foaming agent composition, polyols, organic polyisocyanates and auxiliary agents.

In some embodiments, the mass ratio of the auxiliary agent, the foaming agent composition, and the polyol is (0.01-0.2):(0.3-3):1, preferably (0.03-0.1):(0.5-2):1.

Specifically, when the amount of the polyol is 1 part by weight, the amount of the auxiliary agent is 0.01-0.2 parts by weight, preferably 0.03-0.1 parts by weight, and the amount of the foaming agent composition is 0.3-3 parts by weight, preferably 0.5-2 parts by weight.

Specifically, when the amount of the polyol is 1 part by weight, the amount of the auxiliary agent can be 0.01 parts by weight, 0.02 parts by weight, 0.03 parts by weight, 0.04 parts by weight, 0.05 parts by weight, 0.06 parts by weight, 0.07 parts by weight, 0.08 parts by weight, 0.09 parts by weight, 0.1 parts by weight, 0.11 parts by weight, 0.12 parts by weight, 0.13 parts by weight, 0.14 parts by weight, 0.15 parts by weight, 0.16 parts by weight, 0.17 parts by weight, 0.18 parts by weight, 0.19 parts by weight, or 0.2 parts by weight.

Specifically, when the amount of the polyol is 1 part by weight, the amount of the foaming agent composition can be 0.3 parts by weight, 0.4 parts by weight, 0.5 parts by weight, 0.6 parts by weight, 0.7 parts by weight, 0.8 parts by weight, 0.9 parts by weight, 1 part by weight, 1.5 parts by weight, 2 parts by weight, 2.5 parts by weight, or 3 parts by weight.

In some embodiments, the mass ratio of the auxiliary agent, foaming agent composition, and organic polyisocyanate is (0.01-0.3):(0.25-4):1, preferably (0.03-0.2):(0.5-3):1.

Specifically, when the amount of the organic polyisocyanate is 1 part by weight, the amount of the auxiliary agent is 0.01-0.3 parts by weight, preferably 0.03-0.2 parts by weight, and the amount of the foaming agent composition is 0.25-4 parts by weight, preferably 0.5-3 parts by weight. Specifically, when the amount of the organic polyisocyanate is 1 part by weight, the amount of the auxiliary agent can be 0.01 parts by weight, 0.02 parts by weight, 0.03 parts by weight, 0.04 parts by weight, 0.05 parts by weight, 0.06 parts by weight, 0.07 parts by weight, 0.08 parts by weight, 0.09 parts by weight, 0.1 parts by weight, 0.11 parts by weight, 0.12 parts by weight, 0.13 parts by weight, 0.14 parts by weight, 0.15 parts by weight, 0.16 parts by weight, 0.17 parts by weight, 0.18 parts by weight, 0.19 parts by weight, 0.2 parts by weight, 0.21 parts by weight, 0.22 parts by weight, 0.23 parts by weight, 0.24 parts by weight, 0.25 parts by weight, 0.26 parts by weight, 0.27 parts by weight, 0.28 parts by weight, 0.29 parts by weight, or 0.3 parts by weight.

Specifically, when the amount of the organic polyisocyanate is 1 part by weight, the amount of the foaming agent composition can be 0.25 parts by weight, 0.3 parts by weight, 0.35 parts by weight, 0.4 parts by weight, 0.45 parts by weight, 0.5 parts by weight, 0.55 parts by weight, 0.6 parts by weight, 0.65 parts by weight, 0.7 parts by weight, 0.75 parts by weight, 0.8 parts by weight, 0.85 parts by weight, 0.9 parts by weight, 0.95 parts by weight, 1 part by weight, 1.5 parts by weight, 2 parts by weight, 2.5 parts by weight, 3 parts by weight, 3.5 parts by weight, or 4 parts by weight.

In the present application, the auxiliary agent is selected from one or more of a cross-linking agent, a catalyst, a foam stabilizer, an antioxidant, a flame retardant and a pigment.

In the present application, the polyol is selected from one or two of polyether polyols or polyester polyols.

In the present application, the polyether polyols are selected from one or more of polyether diols, polyether triols, polyether tetraols, pentahydroxypolyethers, and polyether sorbitols, mannitosl, and sucrose alcohol.

The polyester polyol is formed by condensation (or transesterification) or polymerization of the raw materials selected from the following group consisting of: phthalic acid or phthalic anhydride or its esters, adipic acid, halogenated phthalic acid; with polyols such as ethylene glycol, propylene glycol, diethylene glycol, trimethylolpropane, pentaerythritol, etc

In the present application, the organic polyisocyanate is selected from one or more of hexamethylene diisocyanate (HDI), 2,2,4-trimethylhexane diisocyanate (TMHDI), methylcyclohexylene diisocyanate (TDI), dicyclohexylmethylene diisocyanate (MDI), isophorone diisocyanate (IPDI), xylene diisocyanate (XDI), meta- or para-1,4-methyl xylene diisocyanate (abbreviated as m- or p-TMXDI), ethylene isocyanate (TMI), and furan diisocyanate.

In the present application, the catalysts are organic tertiary amine and metal salt catalysts, specifically including N,N-dimethylcyclohexylamine, bis(2-dimethylaminoethyl)ether, triethylenediamine, N,N,N',N'-tetramethylethylenediamine, triethylamine, N-ethylmorpholine, N-methylmorphine, N,N-dimethylbenzylamine, N,N,N',N",N"-pentamethyldiethylenetriamine, N,N'-diethylpiperazine, N,N'-diethyl-2-methylpiperazine, N,N-dimethylethanolamine, triethanolamine, organotin compounds, alkali metal and alkaline earth metal salt compounds, etc.

In some embodiments, in the raw materials of the polyurethane foam, the auxiliary agent is N,N-dimethylcyclohexylamine and silicone surfactant, and the polyol is a blend of polyether polyol which uses glycerol as initiator, polyether polyol which uses sorbitol as initiator, and polyether polyol which uses sucrose as initiator; the organic polyisocyanate is MDI.

In the present application, the density of the polyurethane foam is less than 30.0kg/m³, for example, 28.0kg/m³.

The thermal conductivity of the polyurethane foam is less than 20.0mW/m·k, for example, 18.6mW/m·k.

The present application provides a method for preparing polyurethane foam, comprising the following steps:
Step 1: providing the aforementioned foaming agent composition;
Step 2: mixing a polyol and an auxiliary agent to prepare a dry white material;
Step 3: mixing the foaming agent composition, the water, and the dry white material under sealed conditions at normal temperature to obtain white material liquid;
Step 4: mixing an organic polyisocyanate with the white material liquid and allowing them to react, to prepare polyurethane foam material liquid; and
Step 5: forming the polyurethane foam material liquid into a polyurethane foam having desired shape through a molding reaction by means of extrusion or spray coating.

In the Step 3, the foaming agent composition, water, and dry white material are mixed under sealed conditions at normal temperature for 0.5h-24h, for example, 0.5 h, 1h, 2h, 3h, 4h, 5h, 6h, 7h, 8h, 9h, 10h, 11h, 12h, 13h, 14h, 15h, 16h, 17h, 18h, 19h, 20h or 24 h.

The time for mixing and reacting the organic polyisocyanate with the white material liquid is 0.1h-4h, for example, it can be 0.1 h, 0.2h, 0.3h, 0.4h, 0.5h, 0.6h, 0.7h, 0.8h, 0.9h, 1h, 1.1h, 1.2h, 1.3h, 1.4h, 1.5h, 1.6h, 1.7h, 1.8h, 1.9h, 2h, 2.1h, 2.2h, 2.3h, 2.4h, 2.5h, 2.6h, 2.7h, 2.8h, 2.9h, 3h, 3.1h, 3.2h, 3.3h, 3.4h, 3.5h, 3.6h, 3.7h, 3.8h, 3.9h or 4 h.

The GWP values of all the components in the foaming agent composition provided herein are less than 10, which are far below the environmental protection value of 150 required by the policy, making it an ideal environmentally friendly foaming agent composition. The foaming agent composition herein adopts a specific formulation composition to ensure that the foaming agent composition has a suitable boiling point and a lower GWP, because if the boiling point of the foaming agent composition is too low, such as below -20 °C, it cannot be used normally at normal temperature due to the fast foaming speed; if the boiling point of the foaming agent composition is too high, such as above 60 °C, after foaming, the foaming agent in the cell will become liquid and the vapor pressure will be low, which is difficult to ensure the dimensional stability of foam, so it is not suitable for making ultra-low density foam. In the foaming agent composition provided herein, each component has a small relative molecular weight and a low boiling point, thus the resulting polyurethane foam has a density of less than 30.0kg/m³, and a thermal conductivity of less than 20.0mW/m·k.

Compared to the existing polyurethane foam plastics, the polyurethane foam prepared by using the foaming agent composition provided herein has a significantly reduced molding density (more than 5%). When manufacturing polyurethane foam plastics of the same volume, less raw materials are needed, thus reducing the manufacturing cost; moreover. Due to the small thermal conductivity and good thermal insulation effect, less polyurethane foam can be used to achieve the same thermal insulation effect, thus further reducing the total weight of thermal insulation products. In addition, the ODP of the foaming agent composition provided herein is zero or nearly zero, and the GWP is less than 25, which fully meets the requirements of environmental protection. Moreover, the polyurethane foam prepared by using the foaming agent composition provided herein has low thermal conductivity, and good foam thermal insulation performance, which is beneficial to reducing the energy consumption of refrigeration equipment. The polyurethane foam material liquid has good flowability, and it is easier to achieve a polyurethane foam which has uniform density distribution, flat and smooth surface, and better compression strength and dimensional stability during manufacturing.

### EXAMPLES

The experimental methods used in the following examples are all conventional methods unless otherwise specified.

The materials, reagents, etc. used in the following examples can all be available from commercial sources unless otherwise specified.

### Example 1

The preparation process of polyurethane foam plastics is as follows:
1) a polyol (obtained by mixing 25g of polyether polyol 450L having a hydroxyl value of 500 mgKOH/g with 45g of polyester polyol PS-3152 having a hydroxyl value of 315 mgKOH/g) and an auxiliary agent (obtained by mixing 12g of flame retardant TCPP, 1g of catalyst PCS, and 2g of surfactant AK 8803) was mixed to produce a dry white material.
2) 15g of n-butane, 25g of cyclopentane, 30g of trans-1,3,3,3-tetrafluoropropene, 25g of trans-1-chloro-3,3,3-trifluoropropene, and 3g of water was mixed at normal temperature (15-25 °C) under sealed conditions (1-3 atm pressure) for 1 hour to obtain a foaming agent composition.
3) 150g of polyisocyanate (polyisocyanate PM200) was added to the foaming agent composition and mixed uniformly, so that the polyisocyanate and the foaming agent composition underwent prepolymerization reaction to obtain polyurethane foam material liquid.
4) The final resultingpolyurethane foam material liquid was extruded into the plate mold through a screw extruder, and then continued to foam at normal temperature for 4 hours. The mold was disassembled to obtain polyurethane foam profiles with proper shape and structure. Their parameters can be seen from Table 1.

The only difference between Examples 2-5 and Example 1 lies in the mass ratio of the first hydrocarbon to the second hydrocarbon, as detailed in Table 1.

The only difference between Examples 6-9 and Example 1 lies in the mass ratio of the first fluorinated compound to the second fluorinated compound, as detailed in Table 1.

The only difference between Example 10 and Example 1 lies in the type of the first hydrocarbon, as detailed in Table 1.

The difference between Examples 11-13 and Example 1 lies in the amounts of the first hydrocarbon, the second hydrocarbon, the first fluorinated compound, and the second fluorinated compound, as detailed in Table 1.

The difference between Examples 14-15 and Example 1 lies in the amount of the water, as detailed in Table 1.

The difference between Examples 16-18 and Example 1 lies in the types of the first hydrocarbon, the second hydrocarbon, the first fluorinated compound, and the second fluorinated compound, as detailed in Table 1.

The difference between Comparative Example 1 and Example 1 lies in the absence of the fluorinated compounds, as detailed in Table 1.

The difference between Comparative Example 2 and Example 1 lies in the absence of the hydrocarbons, as detailed in Table 1.

The difference between Comparative Example 3 and Example 1 lies in the absence of water, as detailed in Table 1.

The difference between Comparative Example 4 and Example 1 lies in the amount of the first hydrocarbon, the second hydrocarbon, the first fluorinated compound, the second fluorinated compound, and water, as detailed in Table 1.

The difference between Comparative Example 5 and Example 1 lies in the absence of the second hydrocarbon, as detailed in Table 1.

The difference between Comparative Example 6 and Example 1 lies in the absence of the second fluorinated compound, as detailed in Table 1.

**Table 1. The feeding materials and various parameters for each of the examples and comparative examples.**

| Exam ple | first hydrocarbon | | second hydrocarbon | | first Fluorinated compound | | second Fluorinated compound | | wat er/g | G W P | foam densit y /kg/m 3 | thermal conduct ivity /mW/m ·k |
|---|---|---|---|---|---|---|---|---|---|---|---|---|
| | type | mas s/g | type | mas s/g | type | mass/g | type | mass/ g | | | | |
| 1 | n-bu tane | 15 | cyclope ntane | 25 | trans-1,3,3,3 -tetrafluorop ropene | 30 | trans-1-chloro -3,3,3-trifluor opropene | 25 | 3 | ~1 | 26.8 | 17.8 |
| 2 | n-bu tane | 5 | cyclope ntane | 35 | trans-1,3,3,3 -tetrafluorop ropene | 30 | trans-1-chloro -3,3,3-trifluor opropene | 25 | 3 | ~1 | 27.3 | 18.0 |
| 3 | n-bu tane | 10 | cyclope ntane | 30 | trans-1,3,3,3 -tetrafluorop ropene | 30 | trans-1-chloro -3,3,3-trifluor opropene | 25 | 3 | ~1 | 26.7 | 17.2 |
| 4 | n-bu tane | 20 | cyclope ntane | 20 | trans-1,3,3,3 -tetrafluorop ropene | 30 | trans-1-chloro -3,3,3-trifluor opropene | 25 | 3 | ~1 | 26.5 | 17.6 |
| 5 | n-bu tane | 35 | cyclope ntane | 5 | trans-1,3,3,3 -tetrafluorop ropene | 30 | trans-1-chloro -3,3,3-trifluor opropene | 25 | 3 | ~1 | 29.2 | 19.7 |
| 6 | n-bu tane | 15 | cyclope ntane | 25 | trans-1,3,3,3 -tetrafluorop ropene | 10 | trans-1-chloro -3,3,3-trifluor opropene | 45 | 3 | ~1 | 27.5 | 18.4 |
| 7 | n-bu tane | 15 | cyclope ntane | 25 | trans-1,3,3,3 -tetrafluorop ropene | 15 | trans-1-chloro -3,3,3-trifluor opropene | 40 | 3 | ~1 | 26.8 | 17.3 |
| 8 | n-bu tane | 15 | cyclope ntane | 25 | trans-1,3,3,3 -tetrafluorop ropene | 20 | trans-1-chloro -3,3,3-trifluor opropene | 35 | 3 | ~1 | 26.7 | 17.5 |
| 9 | n-bu tane | 15 | cyclope ntane | 25 | trans-1,3,3,3 -tetrafluorop ropene | 48 | trans-1-chloro -3,3,3-trifluor opropene | 7 | 3 | ~1 | 29.7 | 20.2 |
| 10 | n-bu tane | 15 | cyclope ntane | 25 | trans-1,3,3,3 -tetrafluorop ropene | 30 | perfluorohexa ne | 25 | 3 | ~1 | 26.5 | 16.9 |
| 11 | n-bu tane | 15 | cyclope ntane | 20 | trans-1,3,3,3 -tetrafluorop ropene | 24 | trans-1-chloro -3,3,3-trifluor opropene | 20 | 3 | ~1 | 26.1 | 16.6 |
| 12 | n-butane | 12 | cyclopentane | 15 | trans-1,3,3,3-tetrafluorop ropene | 30 | trans-1-chloro-3,3,3-trifluor opropene | 25 | 3 | ~1 | 27.9 | 18.2 |
| 13 | n-bu tane | 15 | cyclope ntane | 25 | trans-1,3,3,3 -tetrafluorop ropene | 15 | trans-1-chloro -3,3,3-trifluor opropene | 30 | 3 | ~1 | 26.4 | 16.8 |
| 14 | n-bu tane | 15 | cyclope ntane | 25 | trans-1,3,3,3 -tetrafluorop ropene | 30 | trans-1-chloro -3,3,3-trifluor opropene | 25 | 5 | ~1 | 26.6 | 16.7 |
| 15 | n-bu tane | 15 | cyclope ntane | 25 | trans-1,3,3,3 -tetrafluorop ropene | 30 | trans-1-chloro -3,3,3-trifluor opropene | 25 | 9 | ~1 | 28.0 | 18.1 |
| 16 | isob utan e | 15 | isopenta ne | 25 | cis-1,3,3,3-t etrafluoropr opene | 30 | cis-1-chloro-3 ,3,3-trifluorop ropene | 25 | 3 | ~1 | 27.9 | 18.3 |
| 17 | isob utan e | 15 | neopent ane | 25 | cis-1,1,1,3,3, 3-hexafluoro -2-butene | 30 | trans-1,1,1,3,3 ,3-hexafluoro-2-butene | 25 | 3 | ~1 | 27.5 | 17.8 |
| 18 | isop enta ne | 15 | n-pentan e | 25 | trans-1,1,1,3 ,3,3-hexaflu oro-2-butene | 30 | perfluorohexa ne | 25 | 3 | ~1 | 27.0 | 18.0 |
| Comp arativ e Exam ple 1 | n-bu tane | 15 | cyclope ntane | 25 | -- | -- | -- | -- | 3 | ~1 | 31.2 | 21.0 |
| Comp arativ e Exam ple 2 | -- | -- | -- | -- | trans-1,3,3,3 -tetrafluorop ropene | 30 | trans-1-chloro -3,3,3-trifluor opropene | 25 | 3 | ~1 | 31.6 | 20.6 |
| Comp arativ e Exam ple 3 | n-bu tane | 15 | cyclope ntane | 25 | trans-1,3,3,3 -tetrafluorop ropene | 30 | trans-1-chloro -3,3,3-trifluor opropene | 25 | 0 | ~1 | 29.3 | 20.9 |
| Comp arativ e Exam ple 4 | n-bu tane | 6 | cyclope ntane | 5 | trans-1,3,3,3 -tetrafluorop ropene | 40 | trans-1-chloro -3,3,3-trifluor opropene | 40 | 9 | ~1 | 30.2 | 20.7 |
| Comp arativ e Example 5 | n-bu tane | 40 | -- | -- | trans-1,3,3,3 -tetrafluorop ropene | 30 | trans-1-chloro -3,3,3-trifluor opropene | 25 | 3 | ~1 | 30.5 | 19.4 |
| Comp arativ e Exam ple 6 | n-bu tane | 15 | cyclope ntane | 25 | trans-1,3,3,3 -tetrafluorop ropene | 55 | -- | -- | 3 | ~1 | 29.7 | 21.6 |

### Summary:

It can be seen from the above table that the foam density and thermal conductivity of the foaming material prepared from the foaming agent composition herein are both small, wherein the foam density is in the range of 26.1~28.0 kg/m³, the thermal conductivity is in the range of 16.8~18.2 mW/m·k, and the GWP value can be as low as 25 or even below 10.

Although the embodiments of the present application have been described above, the present application is not limited to the specific embodiments and application area mentioned above. The specific embodiments mentioned above are only exemplary and guiding, rather than limiting. Ordinary technical skilled in the art can make many forms in light of the description of the present application and without departing from the scope protected by the claims of the present application, all of which belong to the protection scope of the present application.

## Claims

1. A foaming agent composition, comprising a hydrocarbon, a fluorinated compound (CₙH₂ₙ₋ₘO_{z}Xₘ), and water, wherein in the foaming agent composition, the mass fraction of the hydrocarbon is 20-90%, the mass fraction of the CₙH₂ₙ₋ₘO_{z}Xₘ is 10-80%, and the mass fraction of the water is 0.1-15%, and in CₙH₂ₙ₋ₘO_{z}Xₘ, n is an integer of 3 to 10; z is 0 or 1; n ≤ m ≤ 2n, and X is a halogen.

2. The foaming agent composition according to claim 1, wherein X is selected from at least one of F, Cl, Br, and I, and when X contains two or more elements, the F element accounts for 50 mol% or above in X.

3. The foaming agent composition according to claim 1, wherein the fluorinated compound is selected from one or more of 3,3,3-trifluoropropene, cis-1,3,3,3-tetrafluoropropene, trans-1,3,3,3-tetrafluoropropene, trans-1,1,1,3,3,3-hexafluoro-2-butene, perfluorohexanone, cis-1,1,1,3,3,3-hexafluoro-2-butene,2-chloro-3,3,3-trifluoropropene, 1-chloro-2,3,3-trifluoropropene, 1-chloro-2,3,3,3-tetrafluoropropene, perfluorobutanone, perfluoropentanone, perfluorohexanone, methyl perfluoroheptanone, cis-1-chloro-3,3,3-trifluoropropene, and trans-1-chloro-3,3,3-trifluoropropene.

4. The foaming agent composition according to any one of claims 1-3, consisting of the hydrocarbon, CₙH₂ₙ₋ₘO_{z}Xₘ, and water, wherein in the foaming agent composition, the mass fraction of the hydrocarbon is 20-90%, the mass fraction of the CₙH₂ₙ₋ₘO_{z}Xₘ is 10-80%, and the mass fraction of the water is 0.1-15%.

5. The foaming agent composition according to any one of claims 1-3, wherein the GWP value of the foaming agent composition is less than 25.

6. The foaming agent composition according to claim 1, wherein the hydrocarbon comprises a first hydrocarbon and a second hydrocarbon, and the boiling point of the first hydrocarbon is lower than the boiling point of the second hydrocarbon.

7. The foaming agent composition according to claim 6, wherein the mass ratio of the first hydrocarbon to the second hydrocarbon is (1-50):10.

8. The foaming agent composition according to claim 6, wherein the first hydrocarbon is n-butane, isobutane, or neopentane;
the second hydrocarbon is selected from any one of cyclopentane, n-pentane, and isopentane.

9. The foaming agent composition according to any one of claims 1-3, wherein the fluorinated compound comprises a first fluorinated compound and a second fluorinated compound, and the boiling point of the first fluorinated compound is lower than the boiling point of the second fluorinated compound.

10. The foaming agent composition according to claim 9, wherein the mass ratio of the first fluorinated compound to the second fluorinated compound is (1-50):10.

11. The foaming agent composition according to claim 9, wherein the first fluorinated compound is selected from any one of 3,3,3-trifluoropropene, cis-1,3,3,3-tetrafluoropropene, perfluorobutanone, 2-chloro-3,3,3-trifluoropropene, trans-1,3,3,3-tetrafluoropropene, or trans-1,1,1,3,3,3-hexafluoro-2-butene;
the second fluorinated compound is selected from any one of perfluoropentanone, perfluorohexanone, methyl perfluoroheptanone, 1-chloro-2,3,3-trifluoropropene, 1-chloro-2,3,3,3-tetrafluoropropene, cis-1,1,1,3,3,3-hexafluoro-2-butene,cis-1-chloro-3,3,3-trifluoropropene, or trans-1-chloro-3,3,3-trifluoropropene.

12. A polyurethane foam, wherein the raw materials of the polyurethane foam comprise the foaming agent composition according to any one of claims 1-11.

13. The polyurethane foam according to claim 12, wherein the raw materials of the polyurethane foam further comprise a polyol, an organic polyisocyanate, and an auxiliary agent.

14. The polyurethane foam according to claim 13, wherein the mass ratio of the auxiliary agent, the foaming agent composition, and the polyol is (0.01-0.2):(0.3-3): 1; or
the mass ratio of the auxiliary agent, the foaming agent composition, and the organic polyisocyanate is (0.01-0.3):(0.25-4):1.

15. The polyurethane foam according to claim 12, wherein the density of the polyurethane foam is less than 30.0 kg/m³; or
the thermal conductivity of the polyurethane foam is less than 20.0 mW/m·k.

16. A preparation method of a polyurethane foam, comprising the following steps:
providing the foaming agent composition according to any one of claims 1-11;
mixing a polyol and an auxiliary agent to prepare a dry white material;
mixing the foaming agent composition, the water, and the dry white material under sealed conditions at normal temperature to obtain white material liquid;
mixing an organic polyisocyanate with the white material liquid and allowing them to react, to prepare polyurethane foam material liquid; and
forming the polyurethane foam material liquid into a polyurethane foam having desired shape through a molding reaction by means of extrusion or spray coating.

17. The preparation method according to claim 16, wherein the time for mixing the foaming agent composition, the water, and the dry white material under sealed conditions at normal temperature is 0.5-24 hours; or
the time for mixing and reacting the organic polyisocyanate and the white material liquid is 0.1-4 hours.
